# FASCICULE DE BREVET EUROPEEN

(11) **EP 1 160 944 B1**
(45) Date de publication et mention de la délivrance du brevet: **28.04.2010**
(21) Numéro de dépôt: 01410039.0
(22) Date de dépôt: 05.04.2001
(51) Int. Cl.: H02B 1/20

(54) **Appareil électrique modulaire à embrochage sur un répartiteur isole**
Modulares elektrisches Gerät mit Schnappverbindung an isoliertem Verteiler
Modular electrical apparatus mountable on an insulated distributor

(30) Priorité: 31.05.2000 FR 0006983
(43) Date de publication de la demande: 05.12.2001
(73) Titulaire: Schneider Electric Industries SAS, 92500 Rueil-Malmaison (FR)
(72) Inventeur: Vanzetto, Daniel, Schneider Electric Industries SA, 38050 Grenoble Cedex 09 (FR); Filsnoel, Yann, Schneider Electric Industries SA, 38050 Grenoble Cedex 09 (FR); Pellicano, Joseph, Schneider Electric Ind. SA, 38050 Grenoble Cedex 09 (FR)
(74) Mandataire: Broydé, Marc

(56) Documents cités:
- DE-A- 19 639 401
- FR-A- 2 562 344

## Description

### Domaine technique de l'invention

L'invention est relative à un appareil électrique modulaire comprenant :
- un boîtier isolant ayant une face latérale de raccordement, et une face postérieure agencée pour être installée sur un rail de fixation,
- une borne d'alimentation à cage accessible depuis la face latérale de raccordement,
- et au moins une broche conductrice s'étendant perpendiculairement à la face postérieure pour être embrochée dans une pince d'un répartiteur, ladite broche se trouvant au potentiel de la borne d'alimentation.

### Etat de la technique

Le document EP-A-472409 se rapporte à un disjoncteur débrochable ayant une fiche mâle en saillie sur la face arrière du boîtier, et coopérant avec une pince solidaire du répartiteur. La fiche n'est pas isolée électriquement.

Le document EP-A-229590 décrit un disjoncteur débrochable ayant une pince déplaçable dans une saignée longitudinale du socle. La pince est en saillie, et n'est pas isolée à l'arrière du boîtier.

Les documents EP-A-434964 et EP-A-818072 mentionnent un disjoncteur embrochable sur un bus à fiches mâles non isolées, et ayant une pince logée dans un orifice du boîtier, et se trouvant au potentiel de la borne.

Tous ces appareils connus ne bénéficient pas d'une isolation totale dans la zone d'embrochage, ce qui pose un problème de sécurité des personnes avec un risque d'électrocution par contact direct.

### Objet de l'invention

L'objet de l'invention consiste à améliorer l'isolement d'un appareil électrique modulaire embrochable sur un répartiteur en évitant tout risque de contact direct avec des conducteurs sous tension.

Le dispositif selon l'invention est caractérisé en ce que la broche est logée à l'intérieur d'un évidement ménagé dans la face postérieure du boîtier de l'appareil, et est isolée de l'extérieur par un pont de protection en matière électriquement isolante, lequel s'étend dans l'alignement de la broche pour autoriser l'insertion de la pince lors de l'embrochage.

Selon un mode de réalisation préférentiel, la broche de phase et/ou la broche de neutre est montée dans une saignée d'un support isolant, et est dotée d'un prolongement constituant la plage de contact de la borne d'alimentation. Le support isolant comporte une première languette de réception de la broche de phase et une deuxième languette de réception de la broche de neutre. La broche et le pont de protection sont agencés au milieu de l'évidement.

Selon une caractéristique de l'invention, la broche associée à la plage de contact correspondante constituent une pièce conductrice monobloc réalisée par liaison de deux lamelles de cuivre superposées.

Selon une autre caractéristique de l'invention, chaque pince du répartiteur est isolée par un capot en matière plastique destiné à s'engager dans l'évidement correspondant du boîtier lors de l'embrochage de la broche dans la pince.

La broche plate peut s'étendre parallèlement ou perpendiculairement au rail de fixation.

### Description sommaire des dessins

D'autres avantages et caractéristiques ressortiront plus clairement de la description qui va suivre d'un mode de réalisation de l'invention, donné à titre d'exemple non limitatif et représenté aux dessins annexés dans lesquels :
- la figure 1 est une vue schématique partiellement en coupe d'un appareil selon l'invention, représenté en position embrochée, et monté sur un rail DIN ;
- la figure 2 montre une vue en perspective de l'appareil de la figure 1 ;
- la figure 3 illustre la face arrière de l'appareil en position débrochée ;
- la figure 4 représente une vue schématique en perspective du répartiteur de la figure 2 ;
- la figure 5 montre une vue schématique en coupe et à échelle agrandie de la disposition des broches de phase et de neutre de l'appareil ;
- la figure 6 montre une vue schématique en coupe d'une pince isolée du répartiteur ;
- la figure 7 est une vue en perspective d'une pièce monobloc comprenant la broche et la plage de contact de la borne ;
- les figures 8 et 9 sont des vues en élévation de la zone de raccordement à double alimentation, respectivement d'un disjoncteur unipolaire, et d'un disjoncteur de neutre ayant un pas de 18mm ;
- la figure 10 représente une vue en perspective de la zone de raccordement d'un disjoncteur unipolaire et neutre à pas de 18mm ;
- la figure 11 est une vue en élévation de la zone de raccordement du disjoncteur de la figure 10 ;
- les figures 12 et 13 montrent des vues partielles en perspective d'un disjoncteur unipolaire et neutre avec deux dispositions des broches d'embrochage ;
- la figure 14 représente une vue en perspective d'une variante de réalisation du répartiteur ;
- la figure 15 est une vue de profil du répartiteur de la figure 14 ;
- les figures 16 et 17 sont des vues schématiques d'une variante de répartiteur à pinces tubulaires ;
- les figures 18 et 19 sont des vues schématiques d'une variante de répartiteur à pinces inclinées.

### Description d'un mode de réalisation préférentiel

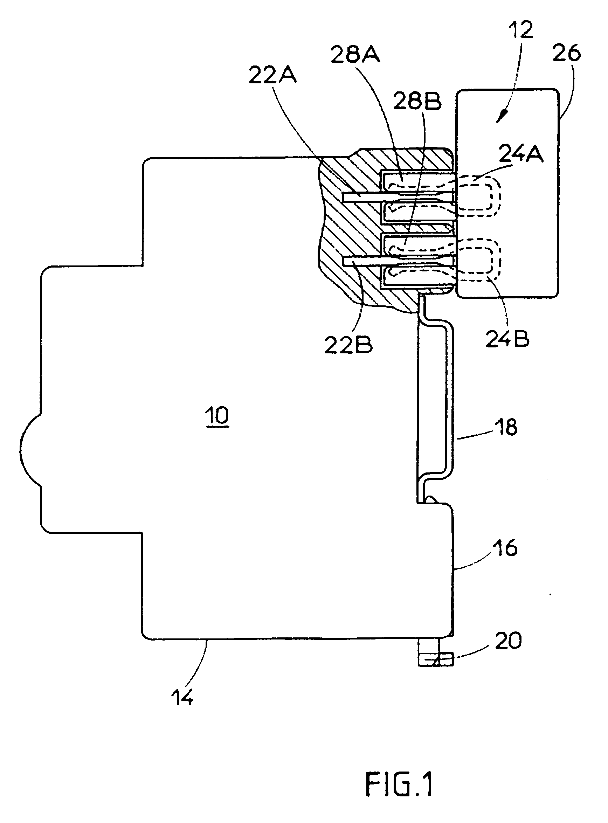

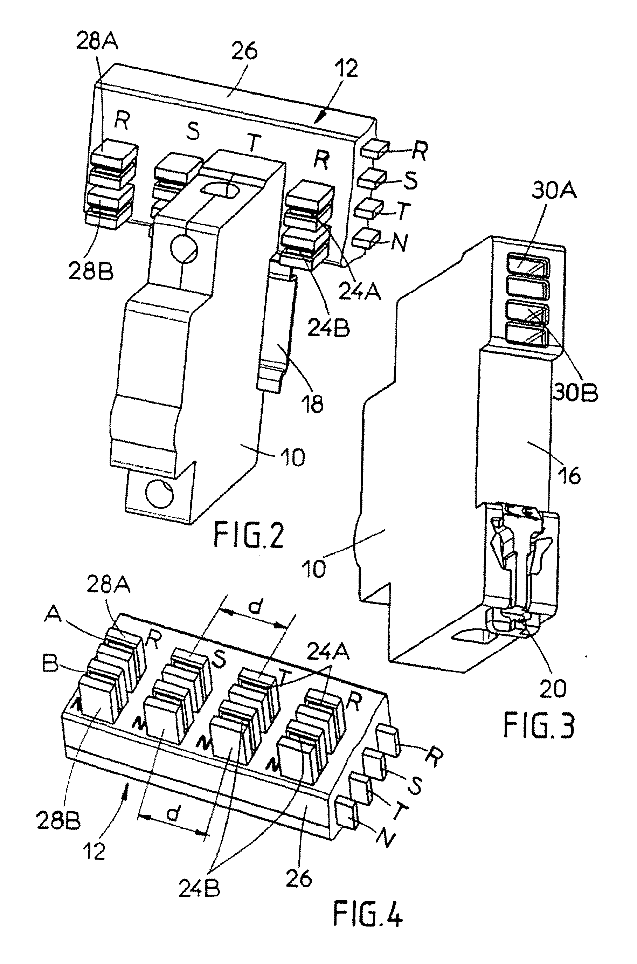

En référence aux figures 1 à 6, un appareil électrique 10 embrochable sur un répartiteur 12 d'alimentation, est logé dans un boîtier 14 en matière isolante, dont la face postérieure 16 est montée par encliquetage sur un rail de fixation 18 par l'intermédiaire d'au moins un verrou 20. L'appareil électrique 10 est constitué à titre d'exemple par un disjoncteur modulaire de largeur 18mm, mais l'invention s'applique également à d'autres appareils à basse tension, notamment des interrupteurs ou contacteurs. Le répartiteur 12 peut être du type unipolaire et neutre (figure 1), ou triphasé avec neutre (figures 2 et 4).

L'appareil 10 est équipé d'une paire de broches conductrices 22A, 22B destinées à s'embrocher dans des pinces 24A, 24B sous tension du répartiteur 12. La broche 22A correspond à une broche de phase, tandis que la broche 22B, située entre la broche de phase et le rail 18, est une broche de neutre.

Le répartiteur 12 comporte quatre barres conductrices R, S, T, N d'alimentation s'étendant parallèlement dans une enveloppe 26 allongée en matière isolante. Les pinces 24A des différentes phases sont raccordées électriquement aux barres R, S, T correspondantes, et sont échelonnées à intervalles réguliers dans un même plan A avec le même ordre de succession des phases R, S, T. Le pas d des intervalles entre les pinces 24A de phases est de 18mm pour des appareils modulaires de mêmes largeurs. Les pinces 24B de neutre sont raccordées à la barre de neutre N, et se trouvent dans un même plan B parallèle au plan A des pinces de phases 24A. Le pas d de décalage entre les pinces 24B de neutre est de 18mm.

A chaque pince 24A d'une phase R, S, T est associée une pince de neutre 24B adjacente, de manière à autoriser l'embrochage de divers types d'appareils ayant un pas de 18mm entre pôles, notamment des appareils unipolaires, bipolaires, tripolaires, tripolaires et neutre, et unipolaires et neutre. Chaque pince de phase 24A et de neutre 24B est isolée individuellement par un capot 28A, 28B en matière plastique isolante, présentant une structure en U destinée à s'engager dans un évidement 30A, 30B conjugué ménagé dans le boîtier 14 du disjoncteur 10.

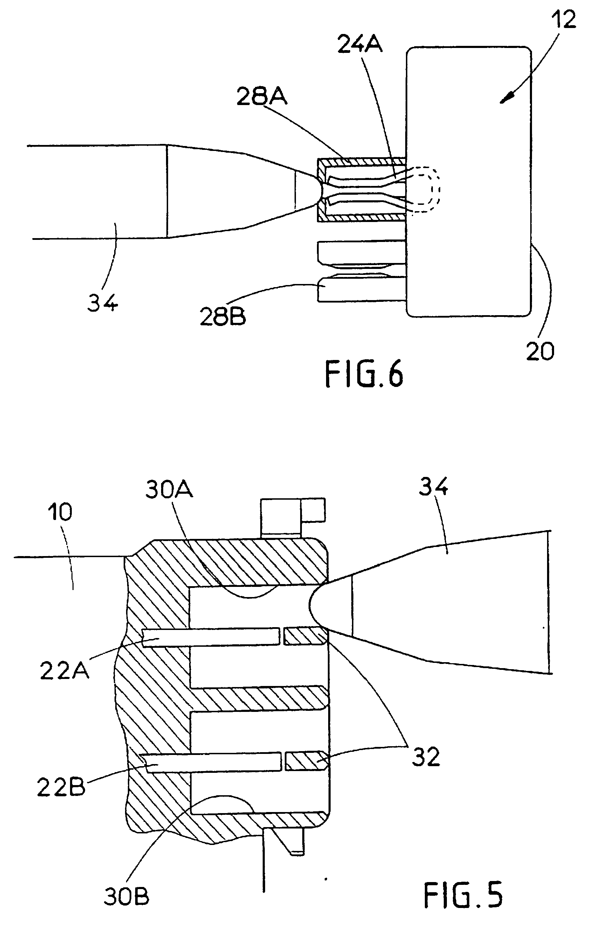

En référence à la figure 5, l'extrémité de la broche de phase 22A et de la broche de neutre 22B du disjoncteur 10 est isolée par un pont de protection 32 en matière électriquement isolante. Les broches 22A, 22B sont intégrées à l'intérieur du boîtier 14, et la présence du pont 32 rend impossible l'introduction d'un doigt de contrôle 34 normalisé dans chacun des évidements 30A, 30B, ce qui interdit tout accès aux parties internes sous tension.

Sur la figure 6, l'orifice d'entrée des capots 28A, 28B isolants du répartiteur 12 est calculé pour autoriser le passage des broches 22A, 22B lors de l'embrochage, mais pour éviter l'introduction du doigt de contrôle 34. Il en résulte que le disjoncteur 10 et le répartiteur 12 sont parfaitement isolés, ce qui garantit la sécurité électrique des personnes en conformité avec les normes en vigueur.

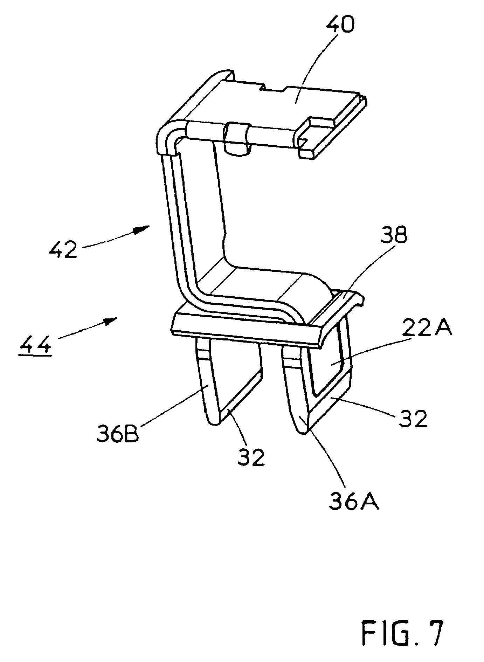

En référence à la figure 7, une broche de phase 22A d'un disjoncteur unipolaire est logée dans une saignée d'une première languette 36A d'un support 38 isolant, et est reliée à une plage de contact 40 par une partie intermédiaire 42 coudée. L'ensemble des éléments 40, 42, 22A forme une pièce conductrice 44, laquelle est réalisée par brasure de deux lamelles de cuivre superposées. Le support 38 isolant comporte une deuxième languette 36B destinée à la réception de la broche de neutre 36B dans le cas d'un disjoncteur de neutre ou d'un disjoncteur unipolaire et neutre. Les extrémités des deux languettes 36A, 36B constituent les ponts de protection 32 pour l'isolement du disjoncteur 10.

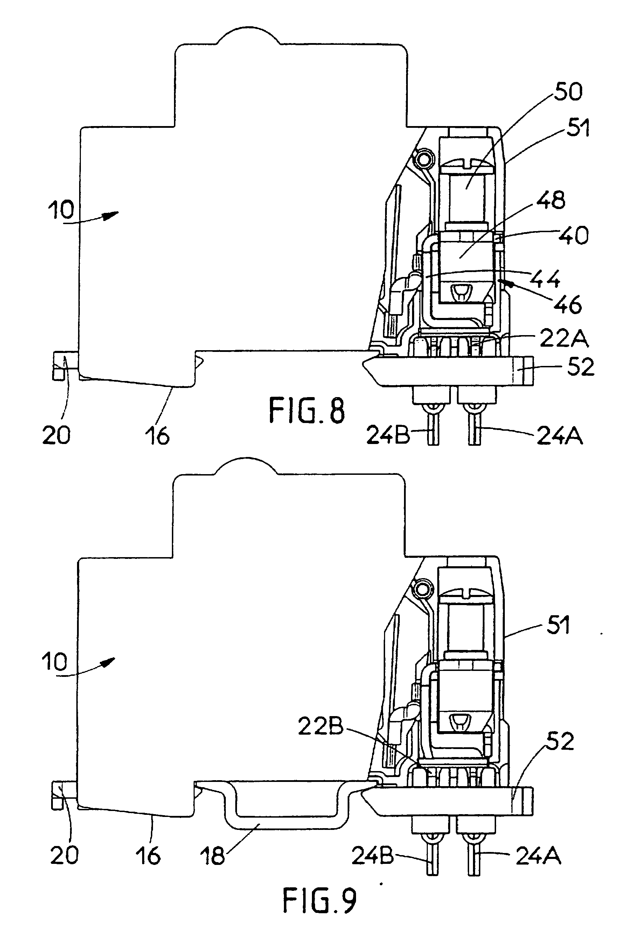

Sur la figure 8, un disjoncteur 10 unipolaire au pas de 18mm, est équipé de la pièce conductrice 44 de la figure 7, et d'une borne de connexion 46 à cage 48 et à vis de serrage 50. Le disjoncteur 10 dispose ainsi d'une double possibilité d'alimentation à l'amont, l'une par embrochage sur la pince de phase 24A du répartiteur 12, et l'autre par un câble de phase engagé dans la cage 48 de la borne 46 depuis la face latérale de raccordement 51. La plage de contact 40 sert au serrage du câble de phase dans la cage 48. La deuxième languette 36B du support 38 isolant est dépourvue de la broche de neutre 22B, et s'engage dans la pince de neutre 24B, laquelle n'est pas utilisée. Le disjoncteur 10 est doté d'un deuxième verrou 52 du côté de la zone d'embrochage, et à l'opposé du premier verrou 20.

La figure 9 montre un disjoncteur 10 de neutre au pas de 18mm, dans lequel la broche de neutre 22B est associée à la deuxième languette 36B. La broche de phase 22A n'existe pas, et la pince de phase 24A n'est pas utilisée.

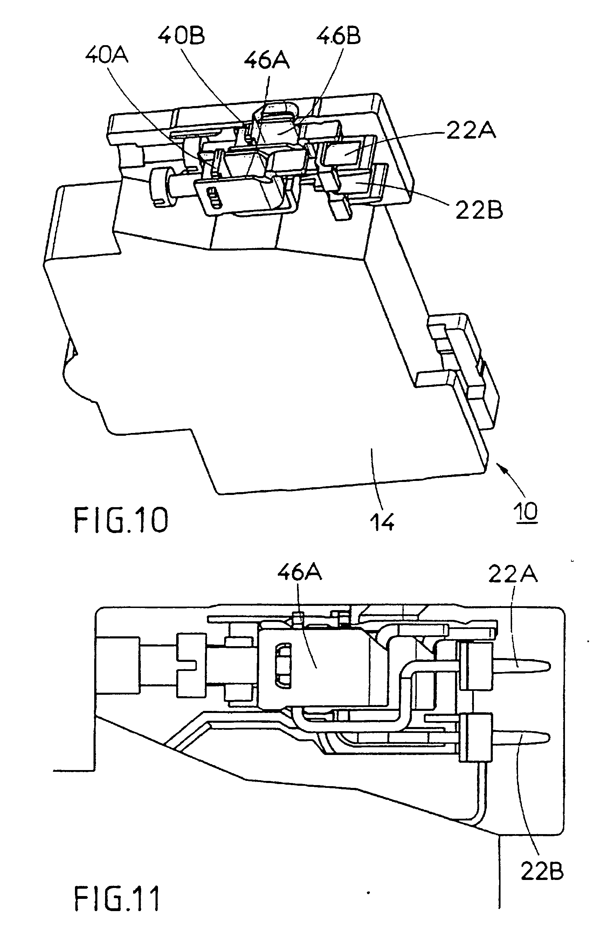

Sur les figures 10 à 12, un disjoncteur 10 unipolaire et neutre au pas de 18mm, comporte une borne de phase 46A, et une borne de neutre 46B dont les plages de contact 40A, 40B sont respectivement en liaison électrique avec une broche de phase 22A, et une broche de neutre 22B. Les broches 22A et 22B s'étendent parallèlement au rail 18.

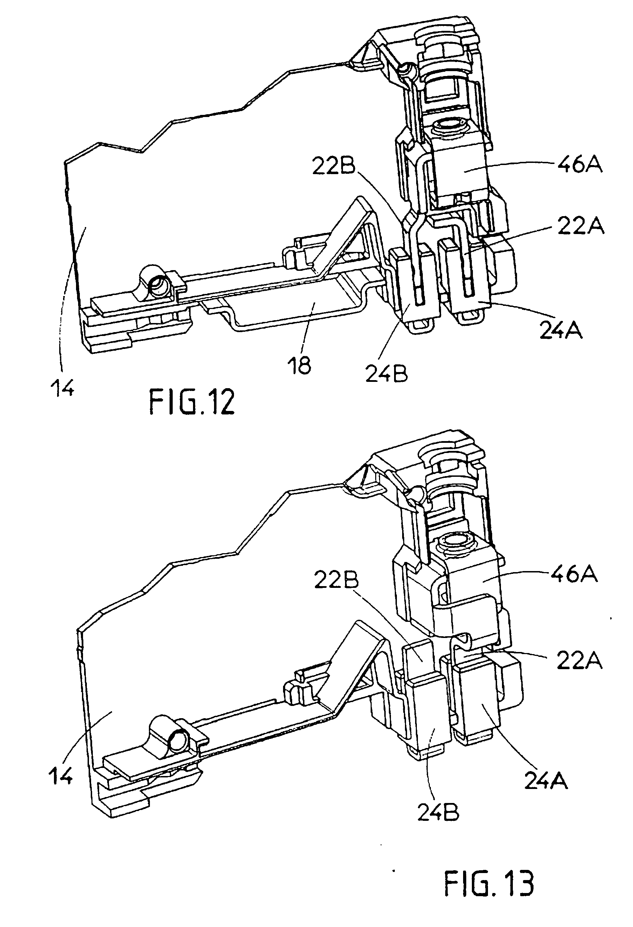

La figure 13 illustre une variante du disjoncteur de la figure 12, dans lequel les deux broches 22A et 22B s'étendent perpendiculairement au rail 18.

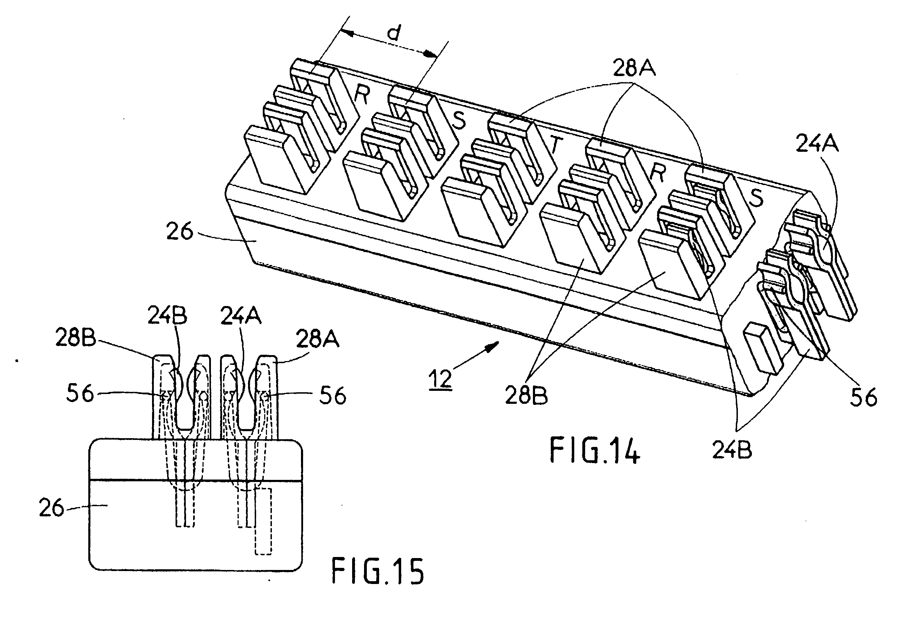

Les figures 14 et 15 représentent une variante du répartiteur 12 triphasé et neutre, dans lequel chaque pince de phase 24A, et chaque pince de neutre 24B est pourvue d'un ressort 56 de pression de contact en forme d'épingle. Le pas d est également de 18mm comme dans le cas de la figure 4.

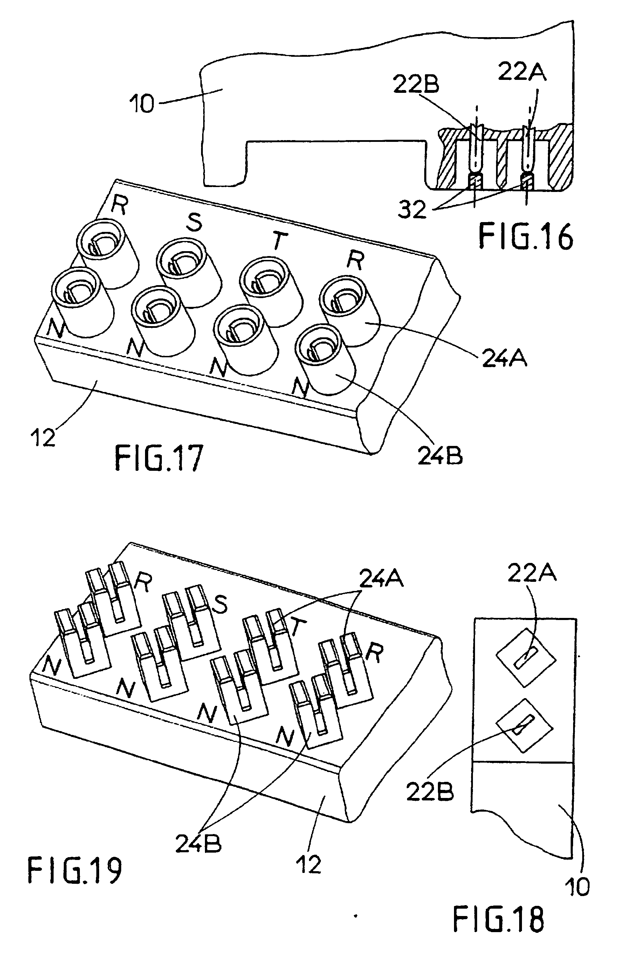

Les figures 16 et 17 illustrent une variante à broches 22A, 22B de sections circulaires coopérant avec des pinces 24A, 24B tubulaires.

Les figures 18 et 19 montrent une autre variante avec des broches 22A, 22B et des pinces 24A, 24B inclinées par rapport à la direction longitudinale du répartiteur 12 ou du rail 18.

## Revendications

1. Appareil électrique modulaire comprenant :
- un boîtier (14) isolant ayant une face latérale de raccordement (51), et une face postérieure (16) agencée pour être installée sur un rail de fixation (18),
- une borne (46, 46A, 46B) d'alimentation à cage (48) accessible depuis la face latérale de raccordement (51),
- et au moins une broche (22A, 22B) conductrice s'étendant perpendiculairement à la face postérieure (16) pour être embrochée dans une pince (24A, 24B) d'un répartiteur (12), ladite broche se trouvant au potentiel de la borne d'alimentation,
**caractérisé en ce que** la broche (22A, 22B) est logée à l'intérieur d'un évidement (30A, 30B) ménagé dans la face postérieure (16) du boîtier (14), et est isolée de l'extérieur par un pont de protection (32) en matière électriquement isolante, lequel s'étend dans l'alignement de la broche (22A, 22B) pour autoriser l'insertion de la pince (24A, 24B) lors de l'embrochage.

2. Appareil électrique modulaire selon la revendication 1, **caractérisé en ce que** la broche de phase (22A) et/ou la broche de neutre (22B) est montée dans une saignée d'un support (38) isolant, et est dotée d'un prolongement constituant la plage de contact (40, 40A, 40B) de la borne (46, 46A, 46B) d'alimentation.

3. Appareil électrique modulaire selon la revendication 2, **caractérisé en ce que** le support (38) isolant comporte une première languette (36A) de réception de la broche de phase (22A), et une deuxième languette (36B) de réception de la broche de neutre (22B).

4. Appareil électrique modulaire selon la revendication 1, **caractérisé en ce que** la broche (22A, 22B) et le pont de protection (32) sont agencés au milieu de l'évidement (30A, 30B).

5. Appareil électrique modulaire selon la revendication 2, **caractérisé en ce que** la broche (22A, 22B) associée à la plage de contact (40, 40A, 40B) correspondante, constituent une pièce conductrice monobloc réalisée par liaison de deux lamelles de cuivre superposées.

6. Appareil électrique modulaire selon la revendication 1, **caractérisé en ce que** chaque pince (24A, 24B) du répartiteur (12) est isolée par un capot (28A, 28B) en matière plastique destiné à s'engager dans l'évidement (30A, 30B) correspondant du boîtier (14) lors de l'embrochage de la broche (22A, 22B) dans la pince (24A, 24B).

7. Appareil électrique modulaire selon la revendication 1, **caractérisé en ce que** la broche (22A, 22B) plate s'étend parallèlement au rail de fixation (18).

8. Appareil électrique modulaire selon la revendication 1, **caractérisé en ce que** la broche (22A, 22B) plate s'étend perpendiculairement au rail de fixation (18).

9. Appareil électrique modulaire selon la revendication 1, **caractérisé en ce que** la broche (22A, 22B) possède une section circulaire, et coopère avec une pince (24A, 24B) tubulaire.

10. Appareil électrique modulaire selon la revendication 1, **caractérisé en ce que** la broche (22A, 22B) plane est inclinée par rapport à la direction longitudinale du rail (18) ou du répartiteur (12).

## Claims

1. Modular electrical unit comprising:
- an insulating case (14) having a side connection face (51) and a rear face (16) arranged to be fitted on a mounting rail (18),
- a power supply terminal (46, 46A, 46B) with a tunnel (48) accessible from the side connection face (51),
- and at least one conducting pin (22A, 22B) extending perpendicularly to the rear face (16) to be plugged into a contact grip (24A, 24B) of a terminal block (12), said pin being at the potential of the power supply terminal,
**characterized in that** the contact pin (22A, 22B) is housed inside a recess (30A, 30B) arranged in the rear face (16) of the case (14), and is insulated from the outside by a protective bridge (32) made from electrically insulating material which extends in the alignment of the contact pin (22A, 22B) to allow the contact grip (24A, 24B) to be inserted when plug-in is performed.

2. Modular electrical unit according to claim 1, **characterized in that** the phase contact pin (22A) and/or the neutral contact pin (22B) is located in a groove of an insulating support (38) and is provided with an extension constituting the contact pad (40, 40A, 40B) of the power supply terminal (46, 46A, 46B).

3. Modular electrical unit according to claim 2, **characterized in that** the insulating support (38) comprises a first tab (36A) receiving the phase contact pin (22A) and a second tab (36B) receiving the neutral contact pin (22B).

4. Modular electrical unit according to claim 1, **characterized in that** the contact pin (22A, 22B) and the protective bridge (32) are arranged in the middle of the recess (30A, 30B).

5. Modular electrical unit according to claim 2, **characterized in that** the contact pin (22A, 228) in conjunction with the corresponding contact pad (40, 40A, 40B) constitutes a monoblock conducting part achieved by joining two superposed copper parts.

6. Modular electrical unit according to claim 1, **characterized in that** each contact grip (24A, 24B) of the terminal block (12) is insulated by a cover (28A, 28B) made from plastic material designed to engage in the corresponding recess (30A, 30B) of the case (14) when plug-in of the contact pin (22A, 22B) in the contact grip (24A, 24B) is performed.

7. Modular electrical unit according to claim 1, **characterized in that** the flat contact pin (22A, 22B) extends in a direction parallel to the mounting rail (18).

8. Modular electrical unit according to claim 1, **characterized in that** the flat contact pin (22A, 22B) extends perpendicularly to the mounting rail (18).

9. Modular electrical unit according to claim 1, **characterized in that** the contact pin (22A, 22B) has a circular cross-section and operates in conjunction with a tubular contact grip (24A, 24B).

10. Modular electrical unit according to claim 1, **characterized in that** the flat contact pin (22A, 22B) is inclined with respect to the longitudinal direction of the rail (18) or of the terminal block (12).

## Patentansprüche

1. Modulares elektrisches Schaltgerät, das
- ein Isolierstoffgehäuse (14) mit einer seitlichen Anschlussfläche (51) sowie einer zur Befestigung auf einer Montageschiene (18) bestimmten Rückseite (16),
- eine über die seitliche Anschlussfläche (51) zugängliche Einspeiseklemme (46, 46A, 46B) mit Klemmkäfig (48),
- sowie mindestens einen, rechtwinklig zur Rückseite (16) angeordneten leitenden Kontaktstift (22A, 22B) umfasst, der dazu dient, in eine Kontaktzange (24A, 24B) eines Verteilers (12) eingesteckt zu werden, und der auf dem gleichen Potential wie die Einspeiseklemme liegt,
**dadurch gekennzeichnet, dass** der Kontaktstift (22A, 22B) im Inneren einer, in der Rückseite (16) des Gehäuses (14) ausgebildeten Ausnehmung (30A, 30B) angeordnet und zur Außenseite hin durch eine Isolierstoff-Schutzbrücke (32) isoliert ist, die mit dem Kontaktstift (22A, 22B) fluchtet, um bei der Herstellung der Steckverbindung die Einführung in die Kontaktzange (24A, 24B) zu ermöglichen.

2. Modulares elektrisches Schaltgerät nach Anspruch 1, **dadurch gekennzeichnet, dass** der Phasenleiter-Kontaktstift (22A) und/oder der Neutralleiter-Kontaktstift (22B) in einen Ausschnitt eines Isolierstoffträgers (38) eingesetzt ist und eine Verlängerung aufweist, welche die Anschlussfahne (40, 40A, 40B) der Einspeiseklemme (46, 46A, 46B) bildet.

3. Modulares elektrisches Schaltgerät nach Anspruch 2, **dadurch gekennzeichnet, dass** der Isolierstoffträger (38) einen ersten Ansatz (36A) zur Aufnahme des Phasenleiter-Kontaktstifts (22A9 sowie einen zweiten Ansatz (36B) zur Aufnahme des Neutralleiter-Kontaktstifts (22B) aufweist.

4. Modulares elektrisches Schaltgerät nach Anspruch 1, **dadurch gekennzeichnet, dass** der Kontaktstift (22A, 22B) und die Schutzbrücke (32) in der Mitte der Ausnehmung (30A, 30B) angeordnet sind.

5. Modulares elektrisches Schaltgerät nach Anspruch 2, **dadurch gekennzeichnet, dass** die den jeweiligen Anschlussfahnen (40, 40A, 40B) zugeordneten Kontaktstifte (22A, 22B) als einstückige leitende Teile ausgebildet sind, die jeweils aus zwei aufeinander liegenden miteinander verbundenen Kupferlamellen bestehen.

6. Modulares elektrisches Schaltgerät nach Anspruch 1, **dadurch gekennzeichnet, dass** jede Kontaktzange (24A, 24B) des Verteilers (12) durch eine Kunststoffabdeckung (28A, 28B) isoliert ist, die dazu dient, beim Einstecken des Kontaktstifts (22A, 22B) in die Kontaktzange (24A, 24B) in die zugeordnete Ausnehmung (30A, 30B) des Gehäuses (14) einzugreifen.

7. Modulares elektrisches Schaltgerät nach Anspruch 1, **dadurch gekennzeichnet, dass** der Flachkontaktstift (22A, 22B) parallel zur Montageschiene (18) angeordnet ist.

8. Modulares elektrisches Schaltgerät nach Anspruch 1, **dadurch gekennzeichnet, dass** der Flachkontaktstift (22A, 22B) rechtwinklig zur Montageschiene (18) angeordnet ist.

9. Modulares elektrisches Schaltgerät nach Anspruch 1, **dadurch gekennzeichnet, dass** der Kontaktstift (22A, 22B) einen kreisrunden Querschnitt aufweist und mit einer rohrförmigen Kontaktzange (24A, 24B) zusammenwirkt.

10. Modulares elektrisches Schaltgerät nach Anspruch 1, **dadurch gekennzeichnet, dass** der Flachkontaktstift (22A, 22B) schräg zur Längsrichtung der Montageschiene (18) bzw. des Verteilers (12) angeordnet ist.
